# EUROPÄISCHE PATENTSCHRIFT

(11) **EP 1 438 148 B1**
(45) Veröffentlichungstag und Bekanntmachung des Hinweises auf die Patenterteilung: **12.10.2005**
(21) Anmeldenummer: 02782722.9
(22) Anmeldetag: 15.10.2002
(51) Int. Cl.: B07C 5/34, B07C 1/00, B07C 3/18

(54) **VERFAHREN UND VORRICHTUNG ZUM BEARBEITEN VON POSTSENDUNGEN**
METHOD AND DEVICE FOR PROCESSING MAIL
PROCEDE ET DISPOSITIF POUR TRAITER DES ENVOIS POSTAUX

(30) Priorität: 16.10.2001 DE 10150455
(43) Veröffentlichungstag der Anmeldung: 21.07.2004
(73) Patentinhaber: Deutsche Post AG, 53113 Bonn (DE)
(72) Erfinder: FERY, Peter, 64673 Zwingenberg (DE); HELMUS, Jürgen, 53229 Bonn (DE); MEIER, Gunther, 64354 Reinheim (DE); STUMM, Dieter, 26629 Grossefehn (DE); VULLRIEDE, Carsten, 29693 Hodenhagen (DE)
(74) Vertreter: Jostarndt, Hans-Dieter
(86) Internationale Anmeldenummer: PCT/DE2002/003888
(87) Internationale Veröffentlichungsnummer: WO 2003/037535

(56) Entgegenhaltungen:
- EP-A- 0 589 723
- WO-A-89/01831
- WO-A-98/17405
- US-A- 4 725 718
- US-A- 5 943 432
- US-B1- 6 311 892

## Beschreibung

Die Erfindung betrifft ein Verfahren zum Bearbeiten von Postsendungen, bei dem von Postsendungen Adressangaben des jeweiligen Empfängers erfasst werden, und wobei aus den Adressangaben ein Adresscode erzeugt wird.

Die Erfindung betrifft ferner eine Vorrichtung zur Bearbeitung von Postsendungen mit einer Anschriftenlesemaschine, einer Einrichtung zum Bedrucken der Postsendungen mit einem in Abhängigkeit von ermittelten Anschriftsangaben ermittelten Adresscode und einer Sortiermaschine zur Sortierung der Postsendungen in Abhängigkeit von dem auf ihnen aufgedruckten Adresscode.

Ein Verfahren und eine Vorrichtung zur online-Bearbeitung von weiterzuleitenden Sendungen ist beispielsweise in der internationalen Patentanmeldung WO 98/17405 dargestellt.

Bei derartigen Verfahren erfolgt vorzugsweise ein automatisches Lesen von Briefanschriften mit optischer Zeichenerkennung (OCR). Ein derartiges automatisches Lesen mit anschließender Ermittlung eines Adresscodes, und ein Aufdruck dieses Adresscodes in Form eines Barcodes, erfolgen bei der Anmelderin im großtechnischen Maßstab.

Es ist ferner bekannt, dass von Postunternehmen die Richtigkeit des für Postsendungen entrichteten Entgelts überprüft wird.

Beispielsweise beschreibt die internationale Patentanmeldung WO 89/01831 A1 eine Briefmarke, die sich durch eine Perforation in wenigstens zwei Teile trennen lässt. Auf einem Teil der Briefmarke kann der Nutzer maschinenlesbare Informationen aufbringen, wobei es sich insbesondere um Identifizierungscodes für den Absender oder die Zieladresse handeln kann. Die Identifizierungscodes werden zur Sortierung in einer Sortieranlage verwendet, wobei zusätzlich das Porto für eine Postsendung berechnet und mit dem aufgebrachten Porto der Briefmarke verglichen wird. Ist das Porto nicht ausreichend, wird eine entsprechende Markierung aufgebracht und die Sendung in einen gesonderten Behälter ausgeschleust.

Die US-Patentschrift US 4,725,718 offenbart ein System zur Portosicherung, bei dem aus dem Porto einer Postsendung und der Empfängeradresse eine verschlüsselte Information erzeugt wird, welche zur Portosicherung verwendet wird. Dabei ersetzt die verschlüsselte Information eine herkömmliche Briefmarke. Vorzugsweise wird die verschlüsselte Information in dem Adressfeld aufgedruckt und von einer Sortieranlage eingelesen. Eine Leseeinheit liest die Adresse und die verschlüsselte Information ein und überprüft den Portobetrag im Zusammenhang mit der zugehörigen Adresse. Das Verfahren sieht dabei vor, dass als missbräuchlich eingestufte Sendungen in einen für abgelehnte Sendungen vorgesehenen Behälter ausgeschleust werden.

Die US-Patentschrift US 5,943,432 beschreibt ein gattungsgemä-ßes Verfahren, das eine codierte Briefmarke verwendet, welche einen maschinenlesbaren Freimachungsvermerk aufweist, wobei der Freimachungsvermerk wenigstens ein Minimum an Porto darstellt. In einer Sortieranlage werden sowohl die Adressfelder als auch die Briefmarken der Postsendungen optisch eingelesen. Vorzugsweise erhalten die Postsendungen aufgrund ihrer Adressangaben einen Barcode, nach dem sie innerhalb der Anlage sortiert werden. Wird ebenfalls durch eine optische Leseeinheit eine Postsendung mit einem zu geringen Portobetrag erkannt, wird die betreffende Sendung in einen für abgelehnte Sendungen vorgesehenen Behälter ausgeschleust.

Die europäische Patentanmeldung EP 0 589 723 A2 offenbart ein System zur Portosicherung, das eine Sortieranlage mit einer integrierten Waage vorsieht. Aufgrund des so gemessenen Gewichts einer Postsendung wird der erforderliche Portobetrag ermittelt und auf die Postsendung aufgedruckt. Dabei können in die Portoermittlung weitere Parameter einfließen, welche aus der Adressangabe eingelesen werden. Eine Abweichung zwischen dem ermittelten und dem tatsächlich aufgebrachten Porto kann manuell durch einen Zusteller oder maschinell in einer Sortieranlage festgestellt werden.

Der Erfindung liegt die Aufgabe zugrunde, mit möglichst geringem Aufwand eine möglichst zuverlässige Ermittlung, Ausschleusung und Sortierung von Postsendungen zu erzielen, für deren Freimachungen ein Betrugsverdacht besteht.

Erfindungsgemäß wird diese Aufgabe durch den Gegenstand der unabhängigen Ansprüche 1 und 8 gelöst. Vorteilhafte Weiterbildungen der Erfindung ergeben sich aus den Unteransprüchen 2-7.

Erfindungsgemäß wird die Aufgabe dadurch gelöst, dass ein gattungsgemäßes Verfahren zum Bearbeiten von Postsendungen, bei dem von Postsendungen Adressangaben des jeweiligen Empfängers erfasst werden, wobei aus den Adressangaben ein Adresscode erzeugt wird, so durchgeführt wird, dass überprüft wird, ob die Postsendungen eine erwartete Freimachung aufweist, und dass für den Fall, dass die Postsendungen keine Freimachung aufweist oder dass die erfasste Freimachung von einer erwarteten Freimachung abweicht, ein Entgeltsicherungscode erzeugt wird, dass der Entgeltsicherungscode auf die Postsendungen gedruckt wird, und dass bei einem anschließenden Sortiervorgang die Sortierung in Abhängigkeit von dem Entgeltsicherungscode erfolgt.

Die Erfindung sieht vor, die bisher voneinander getrennten Bearbeitungsschritte des Sortierens von Postsendungen und der Überprüfung der Richtigkeit des auf ihnen befindlichen Entgelts zusammenzufassen, und die Sortierung in Abhängigkeit von einer Überprüfung des Entgelts durchzuführen.

Das Aufdrucken eines Entgeltsicherungscodes erlaubt zunächst ein Ausschleusen von Postsendungen mit Betrugsverdacht aus dem üblichen Bearbeitungsweg von Postsendungen mit korrektem Entgelt.

Der Entgeltsicherungscode ist eine Markierung, die Angaben über ein Ergebnis der jeweils durchgeführten Überprüfung enthält.

Es ist besonders zweckmäßig, Sendungen mit unterschiedlichem Entgeltsicherungscode beim Sortieren voneinander zu trennen.

Es ist besonders zweckmäßig, das Verfahren so durchzuführen, beziehungsweise eine zur Durchführung des Verfahrens geeignete Vorrichtung so auszustatten, dass die voneinander getrennten Sendungen mit verschiedenem Entgeltsicherungscode in voneinander verschiedene Sortierfächer sortiert werden.

Es ist ferner vorteilhaft, dass der Entgeltsicherungscode als ein Zusatz zu dem Adresscode gedruckt wird.

Eine prozesstechnisch besonders einfach zu realisierende Durchführungsform des Verfahrens erfolgt dadurch, dass der Entgeltsicherungscode im Wesentlichen im gleichen Format wie der Adresscode gedruckt wird und beispielsweise an bestimmten Stellen in den Adresscode aufgenommen wird. Ein bevorzugtes Beispiel für Stellen, in die der Entgeltsicherungscode aufgenommen werden kann, sind die Positionen T1/T2.

Durch die zuvor genannten Ausführungsformen ist es möglich, sowohl die Adressangaben als auch die Entgeltsicherungsangaben in einen auf die Postsendung aufgebrachten Aufdruck, beispielsweise einen Barcode, zu integrieren.

Hierdurch ist es möglich, dass Sendungen, bei denen sich ein Betrugsverdacht nicht bestätigt hat, nach Feststellung, dass keine Unregelmäßigkeit vorliegt, wieder in den normalen Verarbeitungsvorgang der Postsendungen eingebracht werden können, ohne dass eine erneute Erfassung der Empfängeradresse erforderlich ist.

Eine andere, gleichfalls zweckmäßige Ausführungsform des Verfahrens zeichnet sich dadurch aus, dass der Entgeltsicherungscode statt des Adresscodes auf die Postsendung aufgebracht wird. Diese Variante des Verfahrens hat den Vorteil, dass verhindert wird, dass eine verdächtige Postsendung, dennoch in einen normalen Verarbeitungsvorgang für Postsendungen eingebracht wird.

Ein weiterer Gegenstand der Erfindung ist, eine Vorrichtung zur Bearbeitung von Postsendungen mit einer Anschriftenlesemaschine, einer Einrichtung zum Bedrucken der Postsendungen mit einem in Abhängigkeit von ermittelten Anschriftsangaben ermittelten Adresscode und einer Sortiermaschine zur Sortierung der Postsendungen in Abhängigkeit von dem auf ihnen aufgedruckten Adresscode so auszugestalten, dass sie ein Mittel zur Erkennung von Fälschungsverdacht und zur Kategorisierung verschiedener Verdachtsfälle enthält, und dass sie eine Steuereinheit für die Druckeinrichtung aufweist, wobei die Steuereinheit so beschaffen ist, dass sie einen Druck des Entgeltsicherungscodes auf die Postsendung steuern kann.

Diese Vorrichtung eignet sich für die Durchführung aller möglichen Verfahrensschritte.

Weitere Vorteile, Besonderheiten und zweckmäßige Weiterbildungen der Erfindung ergeben sich aus den Unteransprüchen und der nachfolgenden Darstellung bevorzugter Ausführungsbeispiele der Erfindung.

Nachfolgend wird die Erfindung anhand der Bearbeitung von Postsendungen in hintereinander angeordneten Maschinen dargestellt. Für die Durchführung des Verfahrens eignen sich jedoch auch andere Vorrichtungen, beispielsweise eine zum Lesen der Anschriften und eine zum Sortieren der Postsendungen.

Nachfolgend wird eine besonders bevorzugte Ausführungsform mit hintereinander angeordneten Maschinen dargestellt, bei der das Erfassen der Empfängeradresse, der Entgeltsicherung, und die Sortierung von Postsendungen besonders schnell und zuverlässig durch eine Anschriftenlesemaschine und einer Sortiermaschine erfolgt.

Es ist besonders zweckmäßig, die Erzeugung des Adresscodes und die Echtheitsüberprüfung möglichst zusammenzufassen.

Insbesondere werden Postsendungen, die ein oder mehrere zu erwartende Sicherheitsmerkmale nicht aufweisen, aus dem Produkutionslauf, das heißt aus dem normalen Beförderungsweg der Postsendungen, ausgeschleust.

Ein Beispiel für ein derartiges Sicherungsmerkmal ist das Vorhandensein von Superfluoreszenz. Grundsätzlich eignet sich auch eine konventionelle Fluoreszenz als Mittel für eine Echtheitsüberprüfung. Die sogenannte Superfluoreszenz, die auf einer Auswertung der im Regelfall wesentlich schwächeren Anti-Stokes-Linien beruht, ist jedoch ein besonders geeignetes Sicherungsmerkmal.

Beispielsweise wird nach einer vorangegangenen Bestrahlung mit infrarotem Licht überprüft, ob eine Emission von sichtbarem Licht erfolgt. Alternativ wird beispielsweise nach einer Bestrahlung mit sichtbarem Licht überprüft, ob eine Emission im Bereich des UV-Lichts erfolgt. Zweckmäßigerweise wird hierbei eine Spektralverteilung des von dem Bereich der Postsendung emittierten Lichts untersucht und/oder überprüft, ob diese Spektralanteile mit einer zuvor festgegebenen Wellenlänge und Intensität enthält.

Da für die Herstellung von fälschungssicherem Superfluoreszenzfarbstoff Stoffe, insbesondere Farbstoffe mit Bestandteilen von seltenen Erd-Atomen eingesetzt werden, die eine oder mehrere diskrete Fluoreszenzlinien aufweisen, ist es so möglich zu erkennen, ob ein echter Superfluoreszenzfarbstoff vorliegt.

Die dargestellten Mittel zur Überprüfung von Sicherheitsmerkmalen können durch gleichwirkende Mittel ersetzt werden.

Für den Fall, dass ein derartiges Sicherungsmerkmal oder ein anderes mögliches Sicherungsmerkmal, wie das Vorhandensein eines digital verschlüsselten und zu entschlüsselnden Cryptostring nicht vorliegt, wird die Postsendung mit einer Codierung versehen. Vorzugsweise wird diese Codierung in den Adresscode integriert, so dass die Postsendung den Beförderungsverlauf bis zu ihrer Ausschleusung normal durchlaufen kann und so ohne weiteren Aufwand ausgeschleust werden kann. Hierzu eignet sich insbesondere die bereits dargestellte Integration der Entgeltsicherungscodes in die Stellen T1/T2 des Adresscodes.

Es ist ferner zweckmäßig, an geeigneten Stellen der Vorrichtung Möglichkeiten zum Ausschleusen von Sendungen zu schaffen, bei denen eines oder mehrere der Sicherheitsmerkmale nicht aufgefunden werden und/oder die kein für eine Freimachung vorgegebenes graphisches Symbol enthalten.

Jede Sendung, die eine Anschriftenlesemaschine durchläuft, wird codiert, um in der nachfolgenden Feinsortiermaschine weiterbearbeitet werden zu können.

Der 11-stellige Adresscode beinhaltet bis jetzt nur die Anschrift der Sendung. Mit Einführung des Projektes ZinS erhält eine Sendung, welche in der Anschriftenlesemaschine "negativ auffällt" (z.B. kann bei einer absenderfreigestempelten Sendung die Kennung nicht gelesen werden), eine sogenannte Entgeltsicherungscodierung (= Entgeltsicherungswarnung).

Diese Codierung wird beispielsweise an den Stellen "T1/T2" (Fachbegriff der Codiertechnik) des normalen Anschriftencodes angebracht, womit dieser 13-stellig wird. Anhand des Codeausdruckes kann die Sendung in der Feinsortiermaschine in das entsprechende ESi-Fach ausgeschleust werden.

Grundsätzlich können beliebige Entgeltsicherungscodes eingesetzt werden. Es hat sich jedoch gezeigt, dass ein Einsatz von 2-stelligen Entgeltsicherungscodes geeignet ist, viele, beziehungsweise sogar alle, interessierenden Entgeltsicherungsvorfälle zu erfassen und in die weitere Bearbeitung der Postsendungen, insbesondere ihre Sortierung, zu integrieren. Außerdem lässt ein derartiger 2-stelliger Entgeltsicherungscode sich besonders einfach in den Adresscode integrieren.

Die Erfindung ist jedoch in keiner Weise auf einen derartigen Adresscode beschränkt. Beispielsweise kann in einem besonders einfachen Fall ein 1-bit-Code eingesetzt werden. In dem Beispiel der Verwendung eines 1-bit-Codes wird nur zwischen Postsendungen mit Betrugsverdacht und Postsendungen ohne Betrugsverdacht entschieden. Eine derartige Unterscheidung stellt eine besonders einfache Implementation der Erfindung dar.

Umgekehrt ist es jedoch gleichfalls möglich, erheblich aufwendigere Entgeltsicherungscodes zu integrieren, beispielsweise um verschiedene Positiv- oder Negativlisten mit besonderen Verdachtsfällen einer gesonderten Bearbeitung und gezielten Ausschleusung an gewünschten Stellen des Bearbeitungsvorgangs zu unterziehen.

Die Größe des Entgeltsicherungscodes ist daher nicht beschränkt, sondern kann an die jeweiligen betrieblichen Erfordernisse eines es einsetzenden Postunternehmens angepasst werden.

Die nachfolgende Darstellung von Entgeltsicherungscodierungen ist daher lediglich als ein mögliches Beispiel einer Integration eines Entgeltsicherungscodes in den Prozessablauf bei einer automatisierten Bearbeitung einer Vielzahl von Postsendungen in einem automatisierten Großserienbetrieb zu verstehen und dementsprechend lediglich beispielhaft gemeint.

Die Entscheidungstabelle legt fest, welche Entgeltsicherungscodierungen auf den Sendungen, in Abhängigkeit von den durchzuführenden Prüfungen, angebracht werden. Die Codierungen führen zur Ausschleusung in festgelegte Entgeltsicherungsfächer.

| Nr. | Prüfungen | Entscheidung | Weitere Bearbeitung | Entgeltsicherungs-Codierung | Entgeltsicherungs-Fach | Priorität |
|---|---|---|---|---|---|---|
| | | | | | | 0=max |
| 1. | Freimachungsart identifizieren | | | | | |
| 1.1 | Abeenderfreistempelabdruck (AFM) erkannt | J | s. Pkt. 2 | | | |
| | | N | s. Pkt. 1.2 | | | |
| 1.2 | Image einer PC-Frankierung (PC-F) erkannt | J | s. Pkt. 3 | | | |
| | | N | s. Pkt. 4 | | | |
| 2. | Ist AFM-Kennung (K) und Freimachungswert (F) | K/F | | | | |
| | vollständig zu lesen? (Parallele Prüfung) | | | | | |
| | | J/J | s.Pkt. 2.1 | | | |
| | | J/N | Sdg ausschleusen | 01 | AFM-Freimachung nicht lesbar | 2 |
| | | N/J | Sdg ausschleusen | 02 | AFM-Kennung nicht lesbar | 1 |
| | | N/N | Sdg ausschleusen | 03 | AFM-Kennung nicht lesbar | 0 |
| | | | | | | |
| 2.1 | Ist die gelesene AFM-Kennung in Negativdatei? | J | Sdg ausschleusen | 04 | AFM-Negativdatei | 3 |
| | | N | s. Pkt. 2.2 | | | |
| 2.2 | Ist die gelesene AFM-Kennung in Positivdatei? | J | s. Pkt. 2.3 | | | |
| | | N | Sdg ausschleusen | 05 | AFM-Nicht in Positivdatei | 4 |
| 2.3 | Ist Mindestfreimachung für AFM erfüllt? | J | s. Pkt. 4 | | | |
| | | N | Sdg ausschleusen | 06 | AFM-Unterfrankierung | 5 |
| 3. | 2D-Barcode lesbar? | J | s. Pkt. 3.1 | | | |
| | | N | Sdg ausschleusen | 11 | PC-F Negativdatei/Barcode nicht lesbar | 0 |
| 3.1 | Cryptostring entschlüsseln | J | s. Pkt. 3.2 | | | |
| | | N | s. Pkt. 3.3 | | | |
| 3.2 | PC-F Version o.k.? | N | Sdg ausschleusen | 22 | PC-F Version/ Datum/Unterfrankierung | 1 |
| 3.3 | Postage-ID gültig? | N | Sdg ausschleusen | 12 | PC-F Fälschungeverdacht | 2 |
| 3.4 | Lizenznummer in Negativdatei? | J | Sdg ausschleusen | 13 | PC-F Negativdatei/Barcode nicht lesbar | 3 |
| 3.5 | Hash-Wert o.k.? | N | Sdg ausschleusen | 14 | PC-F Fälschungsverdacht | 4 |
| 3.6 | Datum o.k. ? | N | Sdg ausschleusen | 21 | PC-F Version/ Datum/Unterfrankierung | 5 |
| 3.7 | Mindestfreimachung erfüllt? | N | Sdg ausschleusen | 23 | PC-F Version/ Datum/Unterfrankierung | 6 |
| | | J | normale Beförderung | 00 | | |
| 4. | Keine ESi-Codierung | | normale Beförderung | 00 | | |

## Patentansprüche

1. Verfahren zum Bearbeiten von Postsendungen, bei dem von Postsendungen Adressangaben des jeweiligen Empfängers erfasst werden, wobei aus den Adressangaben ein Adresscode erzeugt wird,
**dadurch gekennzeichnet,**
**dass** überprüft wird, ob die Postsendungen eine erwartete Freimachung aufweisen, und dass für den Fall, dass die Postsendungen keine Freimachungen aufweisen oder dass die erfasste Freimachung von einer erwarteten Freimachung abweicht, ein Entgeltsicherungscode erzeugt wird, dass der Entgeltsicherungscode auf die Postsendungen gedruckt wird, und dass bei einem anschließenden Sortiervorgang die Sortierung in Abhängigkeit von dem Entgeltsicherungscode erfolgt.

2. Verfahren nach Anspruch 1,
**dadurch gekennzeichnet,**
**dass** sowohl der Entgeltsicherungscode als auch der Adresscode auf die Postsendungen gedruckt werden.

3. Verfahren nach Anspruch 2,
**dadurch gekennzeichnet,**
**dass** der Entgeltsicherungscode als ein Zusatz zu dem Adresscode gedruckt wird.

4. Verfahren nach Anspruch 3,
**dadurch gekennzeichnet,**
**dass** der Entgeltsicherungscode an Stellen gedruckt wird, die für den Adresscode bestimmt sind.

5. Verfahren nach Anspruch 1,
**dadurch gekennzeichnet,**
**dass** statt des Adresscodes der Entgeltsicherungscode auf die Postsendung gedruckt wird.

6. Verfahren nach einem oder mehreren der vorangegangenen Ansprüche,
**dadurch gekennzeichnet,**
**dass** Sendungen mit unterschiedlichem Entgeltsicherungscode bei dem Sortiervorgang voneinander getrennt werden.

7. Verfahren nach Anspruch 6,
**dadurch gekennzeichnet,**
**dass** die voneinander getrennten Sendungen mit verschiedenem Entgeltsicherungscode in voneinander verschiedene Sortierfächer sortiert werden.

8. Vorrichtung zur Bearbeitung von Postsendungen mit einer Anschriftenlesemaschine, einer Einrichtung zum Bedrucken der Postsendungen mit einem in Abhängigkeit von ermittelten Anschriftsangaben ermittelten Adresscode und einer Sortiermaschine zur Sortierung der Postsendungen in Abhängigkeit von dem auf ihnen aufgedruckten Adresscode,
**dadurch gekennzeichnet,**
**dass** sie ein Mittel zur Erkennung von Freimachungsart und Betrugsverdacht und zur Kategorisierung verschiedener Verdachtsfälle enthält, und dass sie eine Steuereinheit für die Druckeinrichtung aufweist, wobei die Steuereinheit so beschaffen ist, dass sie einen Druck des Entgeltsicherungscodes auf die Postsendung steuern kann.

## Claims

1. A method for processing mailpieces, in which address information is acquired about the specific recipient of the mailpiece from the mailpieces, whereby an address code is generated from the address information, **characterized in that** a checking procedure ascertains whether the mailpieces have the expected postage and that, if the mailpieces do not have any postage or if the detected postage differs from the expected postage, a payment assurance code is generated, **in that** the payment assurance code is printed onto the mailpiece and **in that**, within the scope of a subsequent sorting procedure, the sorting is carried out as a function of the payment assurance code.

2. The method according to Claim 1, **characterized in that** the payment assurance code as well as the address code are printed on the mailpieces.

3. The method according to Claim 2, **characterized in that** the payment assurance code is printed as an addition to the address code.

4. The method according to Claim 3, **characterized in that** the payment assurance code is printed at places that are intended for the address code.

5. The method according to Claim 1, **characterized in that,** instead of the address code, the payment assurance code is applied onto the mailpiece.

6. The method according to one or more of the preceding claims, **characterized in that** mailpieces that have different payment assurance codes are separated from each other within the scope of the sorting procedure.

7. The method according to Claim 6, **characterized in that** the mailpieces having different payment assurance codes that have been separated from each other are sorted into different compartments.

8. A device for processing mailpieces with an address reading machine, a means for printing the mailpieces with an address code determined as a function of ascertained address information, and a sorting machine for sorting the mailpieces as a function of the address code printed on them, **characterized in that** said device has a means for detecting the type of postage and the suspicion of fraud and for categorizing different suspicious cases, and **in that** it has a control unit for the printing means, whereby the control unit is such that it can control the printing of the payment assurance code on the mailpiece.

## Revendications

1. Procédé pour le traitement d'envois postaux dans lequel des indications d'adresse du destinataire respectif sont enregistrées à partir d'envois postaux, un code d'adresse étant généré à partir des indications d'adresse,
**caractérisé en ce**
**qu'**une vérification est faite pour voir si les envois postaux comportent un affranchissement prévu, et pour le cas où les envois postaux ne comportent pas d'affranchissement ou que l'affranchissement enregistré diffère d'un affranchissement prévu, un code d'obtention de paiement est généré, que le code d'obtention de paiement est imprimé sur les envois postaux, et que lors d'un processus de triage qui suit, le triage se fait en fonction du code d'obtention de paiement.

2. Procédé selon la revendication 1,
**caractérisé en ce**
**que** sont imprimés sur les envois postaux aussi bien le code d'obtention de paiement que le code d'adresse.

3. Procédé selon la revendication 2,
**caractérisé en ce**
**que** le code d'obtention de paiement est imprimé comme un complément du code d'adresse.

4. Procédé selon la revendication 3,
**caractérisé en ce**
**que** le code d'obtention de paiement est imprimé à des endroits qui sont destinés au code d'adresse.

5. Procédé selon la revendication 1,
**caractérisé en ce**
**que** le code d'obtention de paiement est imprimé sur l'envoi postal au lieu du code d'adresse.

6. Procédé selon une ou plusieurs des revendications précédentes,
**caractérisé en ce**
**que** des envois ayant des codes d'obtention de paiement différents sont séparés entre eux lors du processus de triage.

7. Procédé selon la revendication 6,
**caractérisé en ce**
**que** les envois séparés entre eux ayant des codes d'obtention de paiement différents sont triés dans des compartiments de triage différents entre eux.

8. Dispositif pour le traitement d'envois postaux avec une machine de lecture d'adresses, un aménagement pour l'impression sur les envois postaux d'un code d'adresse obtenu en fonction d'indications d'adresse obtenues et une trieuse pour trier les envois postaux en fonction du code d'adresse imprimé sur ceux-ci,
**caractérisé en ce**
**qu'**il contient un moyen pour la reconnaissance du type d'affranchissement et d'indices de fraude et pour la mise en catégories de différents cas de fraude, et qu'il comporte une unité de pilotage pour le dispositif d'impression, le dispositif de pilotage étant constitué de telle manière qu'il peut piloter une impression du code d'obtention de paiement sur l'envoi postal.
